(19) Europäisches Patentamt
European Patent Office
Office européen des brevets

(11) **EP 4 582 238 A1**

(12) **EUROPEAN PATENT APPLICATION**
published in accordance with Art. 153(4) EPC

(43) Date of publication:
**09.07.2025 Bulletin 2025/28**

(51) International Patent Classification (IPC):
**B29C 45/14** (2006.01)     **B23K 26/352** (2014.01)
**B29C 65/70** (2006.01)

(21) Application number: **23939999.1**

(22) Date of filing: **16.11.2023**

(86) International application number:
**PCT/JP2023/041367**

(87) International publication number:
**WO 2025/104894 (22.05.2025 Gazette 2025/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Mutsuki Electric Co., Ltd.
Osaka-shi, Osaka 544-0004 (JP)**

(72) Inventor: **SAI, Seiichi
Osaka-shi, Osaka 5440004 (JP)**

(74) Representative: **Ricker, Mathias et al
Wallinger Ricker Schlotter Tostmann
Patent- und Rechtsanwälte Partnerschaft mbB
Zweibrückenstraße 5-7
80331 München (DE)**

(54) **METAL MEMBER, METAL-RESIN JOINED BODY, AND METHOD FOR PRODUCING METAL-RESIN JOINED BODY**

(57)     Provided is a metal member capable of firmly joining a synthetic resin member while ensuring gas tightness, a metal-resin joined body, and a method for producing a metal-resin joined body.

In a metal member for being joined to a resin joining surface of a resin member having a synthetic resin that satisfies the following formula (1), the metal member includes a metal joining surface that contacts the resin joining surface, and, on the metal joining surface, a roughened portion provided with a recess and a peripheral portion provided on the periphery of the roughened portion are given, the oxidation number of a metal that constitutes the metal member differs between the roughened portion and the peripheral portion, and methylene iodide causes spreading wetting.
[Mathematical formula 1]

$$\sqrt{\gamma_{iod}{}^{p}} \times \sqrt{\gamma^{p}} + \sqrt{\gamma_{iod}{}^{d}} \times \sqrt{\gamma^{d}} - \gamma \geq 0$$

Formula (1)

In formula (1), $\gamma_{iod}{}^{p}$ is a polar component of the surface free energy of methylene iodide (mJ/m$^2$), $\gamma_{iod}{}^{d}$ is a dispersive component of the surface free energy of methylene iodide (mJ/m$^2$), $\gamma^{p}$ is the polar component of the surface free energy of the synthetic resin in a solid state (mJ/m$^2$), $\gamma^{d}$ is a dispersive component of the surface free energy of the synthetic resin in a solid state (mJ/m$^2$), and y is a sum of the polar component and the dispersive component of the surface free energy of the synthetic resin in a solid state (= $\gamma^{p} + \gamma^{d}$).

EP 4 582 238 A1

[Fig. 1]

<u>30</u>

**Description**

Technical Field

The present invention relates to a metal member, a metal-resin joined body, and a method for producing a metal-resin joined body.

Background Art

As a method for producing a metal-resin joined body in which a metal member made of a metal and a synthetic resin member made of a synthetic resin are joined together, it has been proposed to form a textured, roughened portion, which is called an anchor, on the surface of a metal member that comes into contact with a synthetic resin member (metal joining surface), thereby enhancing the joining strength between the metal member and the synthetic resin member (see, e.g., PTL 1 below).

In order to achieve firm joining in a metal-resin joined body having a roughened portion provided on a metal joining surface, it is necessary to form a complex roughened portion on the metal joining surface, and fill the inside of the roughened portion with a synthetic resin that constitutes a synthetic resin member.

Citation List

Patent Literature

PTL 1: JP5998303B

Summary of Invention

Technical Problem

However, it is hard to fill the inside of a roughened portion with a synthetic resin that constitutes a synthetic resin member, and stable joining strength is difficult to obtain. When the filling of the inside of a roughened portion with a synthetic resin is insufficient, gas tightness and liquid tightness at the joining surface between the metal member and the synthetic resin member decreases.

The invention has been accomplished in view of the above points and addresses the problem of providing a metal member capable of firmly joining a synthetic resin member while ensuring gas tightness and liquid tightness at a joining surface with the synthetic resin member, a metal-resin joined body, and a method for producing a metal-resin joined body.

Solution to Problem

According to this embodiment, the following aspects [1] to [15] are provided.

[1] A metal member for being joined to a resin joining surface of a resin member having a synthetic resin that satisfies the following formula (1), in which

the metal member includes a metal joining surface that contacts the resin joining surface, and
on the metal joining surface, a roughened portion provided with a recess and a peripheral portion provided on the periphery of the roughened portion are given, the oxidation number of a metal that constitutes the metal member differs between the roughened portion and the peripheral portion, and methylene iodide causes spreading wetting.

[Mathematical formula 1]

$$\sqrt{\gamma_{iod}{}^{p}} \times \sqrt{\gamma^{p}} + \sqrt{\gamma_{iod}{}^{d}} \times \sqrt{\gamma^{d}} - \gamma \geq 0$$

Formula (1)

In formula (1), $\gamma_{iod}{}^{p}$ is a polar component of the surface free energy of methylene iodide (mJ/m$^2$), $\gamma_{iod}{}^{d}$ is a dispersive component of the surface free energy of methylene iodide (mJ/m$^2$), $\gamma^{p}$ is a polar component of the surface free energy of the synthetic resin in a solid state (mJ/m$^2$), $\gamma^{d}$ is a dispersive component of the surface free energy of the synthetic resin in a solid state (mJ/m$^2$), and y is the sum of the polar component and the dispersive component of the surface free energy of the synthetic resin in a solid state (= $\gamma^p + \gamma^d$).

[2] A metal member for being joined to a resin joining surface of a resin member having a synthetic resin that satisfies the following formula (2), in which

the metal member includes a metal joining surface that contacts the resin joining surface, and
on the metal joining surface, a roughened portion provided with a recess and a peripheral portion provided on the periphery of the roughened portion are given, the oxidation number of a metal that constitutes the metal member differs between the roughened portion and the peripheral portion, and pure water and methylene iodide cause spreading wetting.
[Mathematical formula 2]

$$\sqrt{\gamma_w{}^p} \times \sqrt{\gamma^p} + \sqrt{\gamma_{iod}{}^d} \times \sqrt{\gamma^d} - \gamma \geq 0$$

Formula (2)

In formula (2), $\gamma_w{}^p$ is a polar component of the surface free energy of pure water (mJ/m$^2$), $\gamma_{iod}{}^d$ is a dispersive component of the surface free energy of methylene iodide (mJ/m$^2$), $\gamma^p$ is a polar component of the surface free energy of the synthetic resin in a solid state (mJ/m$^2$), $\gamma^d$ is a dispersive component of the surface free energy of the synthetic resin in a solid state (mJ/m$^2$), and y is the sum of the polar component and the dispersive component of the surface free energy of the synthetic resin in a solid state (= $\gamma^p + \gamma^d$).

[3] The metal member according to [1] or [2] above, in which the roughened portion has a fractal dimension of 2.1 or more and 3.0 or less as determined by a box-counting method through cross-sectional SEM observation.
[4] The metal member according to [1] or [2] above, in which the roughened portion is provided in the form of a groove extending in a predetermined direction.
[5] A metal-resin joined body obtainable by bringing a metal joining surface of a metal member into contact with a resin joining surface of a resin member having a synthetic resin that satisfies the following formula (3) to join the metal member and the resin member together, in which
on the metal joining surface, a roughened portion provided with a recess and a peripheral portion provided on the periphery of the roughened portion are given, the oxidation number of a metal that constitutes the metal member differs between the roughened portion and the peripheral portion, and methylene iodide causes spreading wetting.
[Mathematical formula 3]

$$\sqrt{\gamma_{iod}{}^p} \times \sqrt{\gamma^p} + \sqrt{\gamma_{iod}{}^d} \times \sqrt{\gamma^d} - \gamma \geq 0$$

Formula (3)

In formula (3), $\gamma_{iod}{}^p$ is a polar component of the surface free energy of methylene iodide (mJ/m$^2$), $\gamma_{iod}{}^d$ is a dispersive component of the surface free energy of methylene iodide (mJ/m$^2$), $\gamma^p$ is a polar component of the surface free energy of the synthetic resin in a solid state (mJ/m$^2$), $\gamma^d$ is a dispersive component of the surface free energy of the synthetic resin in a solid state (mJ/m$^2$), and y is the sum of the polar component and the dispersive component of the surface free energy of the synthetic resin in a solid state (= $\gamma^p + \gamma^d$).
[6] A metal-resin joined body obtainable by bringing a metal joining surface of a metal member into contact with a resin joining surface of a resin member having a synthetic resin that satisfies the following formula (4) to join the metal member and the resin member together, in which
on the metal joining surface, a roughened portion provided with a recess and a peripheral portion provided on the periphery of the roughened portion are given, the oxidation number of a metal that constitutes the metal member differs between the roughened portion and the peripheral portion, and pure water and methylene iodide cause spreading wetting.
[Mathematical formula 4]

$$\sqrt{\gamma_w{}^p} \times \sqrt{\gamma^p} + \sqrt{\gamma_{iod}{}^d} \times \sqrt{\gamma^d} - \gamma \geq 0$$

Formula (4)

In formula (4), $\gamma_w{}^p$ is a polar component of the surface free energy of pure water ($mJ/m^2$), $\gamma_{iod}{}^d$ is a dispersive component of the surface free energy of methylene iodide ($mJ/m^2$), $\gamma^p$ is a polar component of the surface free energy of the synthetic resin in a solid state ($mJ/m^2$), $\gamma^d$ is a dispersive component of the surface free energy of the synthetic resin in a solid state ($mJ/m^2$), and y is the sum of the polar component and the dispersive component of the surface free energy of the synthetic resin in a solid state ($= \gamma^p + \gamma^d$).

[7] A method for producing a metal-resin joined body by bringing a metal joining surface of a metal member into contact with a resin joining surface of a resin member having a synthetic resin that satisfies the following formula (5) to join the metal member and the resin member together,

the method for producing a metal-resin joined body including performing a treatment for forming a roughened portion having a recess on the metal joining surface and a peripheral portion on the periphery of the roughened portion, and also for making the oxidation number of a metal that constitutes the metal member different between the roughened portion and the peripheral portion such that methylene iodide causes spreading wetting on the metal joining surface.

[Mathematical formula 5]

$$\sqrt{\gamma_{iod}{}^p} \times \sqrt{\gamma^p} + \sqrt{\gamma_{iod}{}^d} \times \sqrt{\gamma^d} - \gamma \geq 0$$

Formula (5)

In formula (5), $\gamma_{iod}{}^p$ is a polar component of the surface free energy of methylene iodide ($mJ/m^2$), $\gamma_{iod}{}^d$ is a dispersive component of the surface free energy of methylene iodide ($mJ/m^2$), $\gamma^p$ is a polar component of the surface free energy of the synthetic resin in a solid state ($mJ/m^2$), $\gamma^d$ is a dispersive component of the surface free energy of the synthetic resin in a solid state ($mJ/m^2$), and y is the sum of the polar component and the dispersive component of the surface free energy of the synthetic resin in a solid state ($= \gamma^p + \gamma^d$).

[8] A method for producing a metal-resin joined body by bringing a metal joining surface of a metal member into contact with a resin joining surface of a resin member having a synthetic resin that satisfies the following formula (6) to join the metal member and the resin member together,

the method for producing a metal-resin joined body including performing a treatment for forming a roughened portion having a recess on the metal joining surface and a peripheral portion on the periphery of the roughened portion, and also for making the oxidation number of a metal that constitutes the metal member different between the roughened portion and the peripheral portion such that pure water and methylene iodide cause spreading wetting on the metal joining surface.

[Mathematical formula 6]

$$\sqrt{\gamma_w{}^p} \times \sqrt{\gamma^p} + \sqrt{\gamma_{iod}{}^d} \times \sqrt{\gamma^d} - \gamma \geq 0$$

Formula (6)

In formula (6), $\gamma_w{}^p$ is a polar component of the surface free energy of pure water ($mJ/m^2$), $\gamma_{iod}{}^d$ is a dispersive component of the surface free energy of methylene iodide ($mJ/m^2$), $\gamma^p$ is a polar component of the surface free energy of the synthetic resin in a solid state ($mJ/m^2$), $\gamma^d$ is a dispersive component of the surface free energy of the synthetic resin in a solid state ($mJ/m^2$), and y is the sum of the polar component and the dispersive component of the surface free energy of the synthetic resin in a solid state ($= \gamma^p + \gamma^d$).

[9] The method for producing a metal-resin joined body according to [7] or [8] above, including a first step of bringing the resin joining surface into contact with the metal joining surface heated to a first temperature, and pressurizing the metal member and the resin member at a first pressure, and a second step of, with the metal joining surface having a second temperature that is lower than the first temperature, pressurizing the metal member and the resin member at a second pressure that is higher than the first pressure.

[10] The method for producing a metal-resin joined body according to [9] above, in which after the first step is executed, the heating of the metal joining surface is stopped or the amount of heating is reduced, and also the pressure at which the metal member and the resin member are pressurized is changed from the first pressure to the second pressure to execute the second step.

[11] The method for producing a metal-resin joined body according to [9] above, in which after the first step is executed, the temperature of the metal joining surface is lowered to the second temperature, and then the pressure at which the metal member and the resin member are pressurized is changed from the first pressure to the second pressure to execute the second step.

[12] The method for producing a metal-resin joined body according to any one of [9] to [11] above, in which the first temperature is a temperature that is equal to or higher than the melting point of a resin material that constitutes the resin member.

[13] The method for producing a metal-resin joined body according to [12] above, in which the first temperature is equal to or higher than the melting point of the resin material and equal to or lower than an upper limit temperature that is 20°C higher than the melting point of the resin material.

[14] The method for producing a metal-resin joined body according to [11] above, in which the second temperature is equal to or lower than a temperature that is 10°C higher than the melting point of a resin material that constitutes the resin member.

[15] The method for producing a metal-resin joined body according to [14] above, in which the first temperature is equal to or higher than the melting point of the resin material and equal to or lower than an upper limit temperature that is 20°C higher than the melting point of the resin material, and the second temperature is equal to or lower than a temperature that is 10°C higher than the melting point of the resin material and equal to or higher than a lower limit temperature that is 20°C lower than the melting point of the resin material.

Advantageous Effects of Invention

Because of the above configuration, it is possible to firmly join a synthetic resin member while ensuring gas tightness at a joining surface with the synthetic resin member.

Brief Description of Drawings

[FIG. 1] A cross-sectional view showing the schematic configuration of a metal-resin joined body according to one embodiment of the invention

[FIG. 2] A plan view showing the schematic configuration of a joining surface of a metal member that constitutes the metal-resin joined body of FIG. 1

[FIG. 3] A diagram showing the schematic configuration of a joining apparatus for use in a method for producing a metal-resin joined body according to one embodiment of the invention, showing a state in which a synthetic resin member 10 is placed on a metal joining surface 22.

[FIG. 4] A diagram showing the schematic configuration of a joining apparatus for use in a method for producing a metal-resin joined body according to one embodiment of the invention, showing a state in which the synthetic resin member 10 joins to the metal joining surface 22.

[FIG. 5] An SEM photograph of a metal joining surface of a metal member in Example 1

[FIG. 6] An SEM photograph of a cross-section of the metal member in Example 1

Description of Embodiments

Hereinafter, embodiments of the invention will be described with reference to the drawings. In the drawings, the sizes of members and the like may be exaggerated for illustrative purposes. The invention is not limited to the following embodiments. The following embodiments are presented as examples and are not intended to limit the scope of the invention. Novel embodiments can be implemented in other various forms, and various omissions, substitutions, and modifications can be made without departing from the gist of the invention.

(1) Metal-Resin Joined Body 30

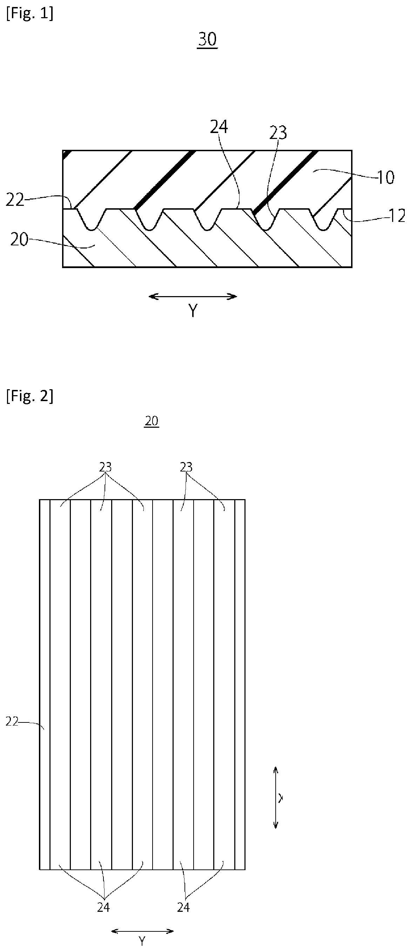

First, a metal-resin joined body 30, which is produced by a production method of this embodiment, will be described. As shown in FIG. 1, the metal-resin joined body 30 includes a synthetic resin member 10 made of a synthetic resin and a metal member 20 made of a metal.

One surface of the synthetic resin member 10 is a resin joining surface 12 that joins to the metal member 20. One surface of the metal member 20 is a metal joining surface 22 that joins to the resin joining surface 12 of the synthetic resin member 10. In the metal-resin joined body 30, the resin joining surface 12 of the synthetic resin member 10 and the metal joining surface 22 of the metal member 20 are joined together.

(2) Synthetic Resin Member 10

The synthetic resin member 10 is a member formed of a synthetic resin molded into a predetermined shape such as a block, plate, or wire shape. In addition, the synthetic resin member 10 may be a coating film of a synthetic resin or an adhesive layer including an adhesive made of a synthetic resin.

As synthetic resins for constituting the synthetic resin member 10, thermoplastic resins, thermosetting resins, and like various synthetic resins can be used. Specific examples include polypropylene resins (PP resins), polyoxymethylene resins (POM resins), polyphenylene sulfide resins (PPS resins), polyetheretherketone resins (PEEK), acrylonitrile/butadiene/styrene resins (ABS resins), polyethylene resins (PE resins), polybutylene terephthalate resins (PBT resins), polyamide resins (PA resins) such as Nylon 6 resin (PA6 resin) and Nylon 66 (PA66), epoxy resins (epoxy adhesives), liquid crystal polymers (LCP resins), modified polyphenylene ether resins (modified PPE), reactor type soft polypropylene-based resins (metallocene-based reactor type TPO resins), perfluoroalkoxyalkane resins (PFA resins), polyacrylamide resins (PAM resins), acrylic resins (PMMA resins), polycarbonate resins (PC resins), polyvinylidene fluoride resins (PVDF resins), polyvinylidene chloride resins (PVCD resins), polyphenylene sulfide resins (PPS resins), polyvinyl chloride resins (PVC resins), polyethylene terephthalate resins (PET resins), polyvinyl fluoride resins (PVF resins), polystyrene resins (PS resins), polyvinyl alcohol resins (PVA resins), paraffin resins, polytetrafluoroethylene resins (PTFE resins), and hexafluoropropylene resins (HFP resins).

In addition, the synthetic resin member 10 may be a carbon fiber-reinforced plastic (CFRTP), which is the synthetic resin as described above incorporating carbon fibers, or may also be the synthetic resin as described above incorporating a reinforcing material such as glass fibers or talc, a flame retardant, an antidegradant, an elastomer component, or the like.

(3) Metal Member 20

The metal member 20 is a member formed of a metal molded into a predetermined shape such as a block, plate, or wire shape. Metals for constituting the metal member 20 are not particularly limited, and various metals can be used.

For example, as metals for constituting the metal member 20, copper (Cu), iron (Fe), aluminum (Al), titanium (Ti), nickel (Ni), chromium (Cr), and the like may be used. In addition, the metal member 20 may be composed of an alloy of two or more metals, such as a copper alloy, an iron alloy (steel material), an aluminum alloy, stainless steel, a titanium alloy, a nickel alloy, or a chromium alloy.

The shape of the metal member 20 can be any desired shape according to the intended use and the like. As the molding method for the metal member 20, any method can be applied, and it is possible to use casting in which a molten metal or the like is poured into a mold of a desired shape, cutting using a machine tool or the like, or punching using a press machine or the like, for example.

In order to enhance the gas and liquid sealing performance (gas tightness and liquid tightness) between the resin joining surface 12 and the metal joining surface 22 in the metal-resin joined body 30, or to enhance the joining strength, it is necessary to bring the resin joining surface 12 into contact with the metal joining surface 22 without any gaps. In order to bring the resin joining surface 12 into contact with the metal joining surface 22 without any gaps, it is necessary to reduce the contact angle of the synthetic resin that constitutes the synthetic resin member 10 on the metal joining surface to enhance wettability.

Thus, in this embodiment, the metal joining surface 22 of the metal member 20 makes a surface on which methylene iodide or pure water causes spreading wetting.

(4) Metal Joining Surface 22

The metal joining surface 22 includes a roughened portion 23 having a recessed shape and a peripheral portion 24 provided on the periphery of the roughened portion 23, and constitutes a surface on which the oxidation number of a metal that constitutes the metal member 20 differs between the roughened portion 23 and the peripheral portion 24, and methylene iodide or pure water causes spreading wetting.

Specifically, as shown in FIGs. 1 and 2, the roughened portion 23 provided on the metal joining surface 22 has a groove shape extending in a predetermined direction (hereinafter, this direction may also be referred to as first direction X). The metal joining surface 22 is provided with a plurality of roughened portions 23 spaced apart in a second direction Y perpendicular to the first direction X. The peripheral portion 24 is provided between roughened portions 23 adjacent in the second direction Y and also on the outside of roughened portions 23 in the second direction Y.

Incidentally, the roughened portion 23 is not limited to a straight groove as shown in FIG. 2, and may be, for example, a circular groove extending in the circumferential direction or a spiral groove that winds away from the center.

In the metal member 20, the oxidation number of the metal in the roughened portion 23 is different from the oxidation number of the metal in the peripheral portion 24. That is, the valence of the metal that constitutes the metal member 20 is different between the roughened portion 23 and the peripheral portion 24, and the number of oxygen atoms attached to a single metal atom is different.

Herein whether the oxidation number of the metal in the roughened portion 23 is different from the oxidation number of the metal in the peripheral portion 24 is judged by X-ray photoelectron spectroscopy (XPS). That is, in the roughened portion 23 and also in the peripheral portion 24, the ratio R of the metal oxide concentration relative to the metal concentration calculated from the peak areas of spectra corresponding to the metal and the metal oxide measured by X-ray photoelectron spectroscopy is obtained. Then, the difference $\Delta R$ between the ratio R in the roughened portion 23 and the ratio R in the peripheral portion 24 is divided by the ratio R in the peripheral portion, and when the resulting ratio S (hereinafter, this ratio may also be referred to as percent difference S) is 3% or more, it is judged that the oxidation number of the metal in the roughened portion 23 is different from the oxidation number of the metal in the peripheral portion 24.

Incidentally, in this embodiment, it is judged that the oxidation number of the metal in the roughened portion 23 is different from the oxidation number of the metal in the peripheral portion 24 when the percent difference S is 3% or more. The greater the percent difference S, the higher the wettability of the synthetic resin. In the case where high joining strength or high sealing performance is required in the metal-resin joined body 30, for example, it is possible that the oxidation number of the metal is judged to be different between the roughened portion 23 and the peripheral portion 24 when the percent difference S is 5% or more.

In such a metal joining surface 22, by changing the above percent difference S or by changing the area of the roughened portion 23 provided on the metal joining surface 22, the metal joining surface 22 can be made a surface on which methylene iodide causes spreading wetting or a surface on which pure water and methylene iodide cause spreading wetting.

Herein spreading wetting means that when a liquid such as methylene iodide or pure water is dropped onto the metal joining surface 22, the contact angle of the liquid droplet on the metal joining surface 22 becomes 10° or less within one second.

Incidentally, it is preferable that the roughened portion 23 provided on the metal joining surface 22 (i.e., the inner wall surface of the recessed groove constituting the roughened portion 23) satisfies at least one of (a) a fractal surface having a fractal dimension D that satisfies $2.1 \leq D \leq 3.0$, (b) a surface having a kurtosis (sku) of 3 or more, and (c) a surface having a skewness of 0 or more.

The fractal dimension D is a dimension determined by a box-counting method through cross-sectional SEM observation.

Kurtosis (sku) is a parameter that represents the sharpness of the height distribution specified in ISO 25178, and is also called peakedness. Kurtosis (sku) = 3 means that the height distribution is normal distribution, kurtosis (sku) > 3 means that the surface has a large number of sharp peaks and valleys, and kurtosis (sku) < 3 means that the surface is flat.

Skewness (ssk) is one of the three-dimensional surface property parameters specified in ISO 25178, and is an index that shows the degree of deviation of the height distribution about the mean plane. The measured values allow for the following understanding: when skewness (ssk) is 0, the surface shape is symmetrical about the mean plane, while when ssk exceeds 0, the surface shape is skewed below the mean plane, i.e., on the lower height side, and the protrusion tends to be sharp and thin near its tops.

In addition, instead of providing the roughened portion 23 on a fractal surface that satisfies the above (a) and increasing the ratio $\alpha$ of the surface area of the roughened portion 23 considering its fractal shape relative to the apparent area of the roughened portion 23 or, alternatively, in addition to increasing the ratio $\alpha$, by reducing the contact ratio $\zeta$ in the roughened portion 23, the wettability on the metal joining surface 22 can be improved.

That is, it is desirable to reduce the contact ratio $\zeta$ of the contact area upon the superposition of a rigid plate over the metal joining surface 22 relative to the apparent area of the roughened portion 23, and, for example, a spire-shaped projecting surface is excellent. It is preferable that the roughened portion 23 has a shape that allows air on the metal joining surface 22 to be easily expelled upon joining. For example, as a result of providing the roughened portion 23 in the form of a recessed groove extending along the first direction X, air on the metal joining surface 22 is expelled to the outside, and the roughened portion 23 is more likely to be filled with the synthetic resin.

(5) Method for Producing Metal-Resin Joined Body 30

Next, a method for producing the metal-resin joined body 30 will be described.

First, a synthetic resin member 10 and a metal member 20, each molded into a predetermined shape, are prepared. Then, a surface treatment step for forming a roughened portion 23 on a metal joining surface 22 of the metal member 20 is performed.

Subsequently, a joining step for joining a resin joining surface 12 of the synthetic resin member 10 to the metal joining surface 22 that has been surface-treated and has formed thereon a roughened portion 23 is performed. As a result of this, a metal-resin joined body 30, in which the synthetic resin member 10 is joined to the metal joining surface 22 of the metal member 20, is obtained. Hereinafter, the surface treatment step and the joining step will be described in detail.

(5-1) Surface Treatment Step

In the surface treatment step, depending on the kind of synthetic resin that constitutes the synthetic resin member 10, the metal joining surface 22 is surface-treated such that methylene iodide causes spreading wetting, or the metal joining surface 22 is surface-treated such that pure water and methylene iodide cause spreading wetting.

Specifically, in the case where the synthetic resin that constitutes the synthetic resin member 10 satisfies the following formula (1), the metal joining surface 22 is subjected to a first surface treatment such that methylene iodide causes spreading wetting. The first surface treatment is a surface treatment to form the roughened portion 23 on the metal joining surface 22 and also make the oxidation number of the metal that constitutes the metal member 20 different between the roughened portion 23 and the peripheral portion 24.

[Mathematical formula 7]

$$f(\gamma^p, \gamma^d) = \sqrt{\gamma_{iod}{}^p} \times \sqrt{\gamma^p} + \sqrt{\gamma_{iod}{}^d} \times \sqrt{\gamma^d} - \gamma \geq 0$$

<div align="right">Formula (1)</div>

In formula (1), $\gamma_{iod}{}^p$ is a polar component of the surface free energy of methylene iodide (mJ/m$^2$), $\gamma_{iod}{}^d$ is a dispersive component of the surface free energy of methylene iodide (mJ/m$^2$), $\gamma^p$ is a polar component of the surface free energy of the synthetic resin in a solid state (mJ/m$^2$), $\gamma^d$ is a dispersive component of the surface free energy of the synthetic resin in a solid state (mJ/m$^2$), and y is the sum of the polar component and the dispersive component of the surface free energy of the synthetic resin in a solid state (= $\gamma^p + \gamma^d$).

In addition, in the case where the synthetic resin that constitutes the synthetic resin member 10 satisfies the following formula (2), the metal joining surface 22 is subjected to a second surface treatment such that pure water and methylene iodide cause spreading wetting. The second surface treatment is a surface treatment to form the roughened portion 23 on the metal joining surface 22 and also make the oxidation number of the metal that constitutes the metal member 20 different between the roughened portion 23 and the peripheral portion 24.

[Mathematical formula 8]

$$g(\gamma^p, \gamma^d) = \sqrt{\gamma_w{}^p} \times \sqrt{\gamma^p} + \sqrt{\gamma_{iod}{}^d} \times \sqrt{\gamma^d} - \gamma \geq 0$$

<div align="right">formula (2)</div>

In formula (2), $\gamma_w{}^p$ is a polar component of the surface free energy of pure water (mJ/m$^2$), $\gamma_{iod}{}^d$ is the dispersive component of the surface free energy of methylene iodide (mJ/m$^2$), $\gamma^p$ is the polar component of the surface free energy of the synthetic resin in a solid state (mJ/m$^2$), $\gamma^d$ is the dispersive component of the surface free energy of the synthetic resin in a solid state (mJ/m$^2$), and y is the sum of the polar component and the dispersive component of the surface free energy of the synthetic resin in a solid state (= $\gamma^p + \gamma^d$).

Incidentally, herein the surface free energy and contact angle values are measured by methods in accordance with ISO19403. In addition, the OWRK method is employed for the analysis of the polar component and component of the surface free energy of a solid, and the values are determined by contact angle measurement using two reagents, pure water and methylene iodide. The surface free energies, f ($\gamma^p$, $\gamma^d$) values, and g ($\gamma^p$, $\gamma^d$) values of methylene iodide, pure water, and representative synthetic resins in solid form are as shown in Table 1 below. Incidentally, larger f ($\gamma^p$, $\gamma^d$) values and larger g ($\gamma^p$, $\gamma^d$) values indicate better spreading wettability.

[Table 1]

| Resin name | Polar Component of Surface Free Energy $\gamma^p$ (mJ/m$^2$) | Dispersive Component of Surface Free Energy $\gamma^d$ (mJ/m$^2$) | Surface Free Energy $\gamma$ (mJ/m$^2$) | f ($\gamma^p$,$\gamma^d$) (mJ/m$^2$) | g ($\gamma^p$,$\gamma^d$) (mJ/m$^2$) |
|---|---|---|---|---|---|
| Methylene iodide | 0.0 | 50.8 | 50.8 | - | - |
| Pure water | 51.0 | 21.8 | 72.8 | - | - |
| Polyacrylamide (PAM) | 25.8 | 26.5 | 52.3 | -13.8 | 20.7 |
| Acrylic resin (PMMA resin) | 11.5 | 36.0 | 47.5 | -2.6 | 19.5 |
| Nylon 6 resin (PA6 resin) | 11.9 | 34.6 | 46.5 | -2.5 | 20.1 |

(continued)

| Resin name | Polar Component of Surface Free Energy $\gamma^p$ (mJ/m$^2$) | Dispersive Component of Surface Free Energy $\gamma^d$ (mJ/m$^2$) | Surface Free Energy $\gamma$ (mJ/m$^2$) | f ($\gamma^p,\gamma^d$) (mJ/m$^2$) | g ($\gamma^p,\gamma^d$) (mJ/m$^2$) |
|---|---|---|---|---|---|
| Polyvinylidene fluoride resin (PVDF resin) | 12.6 | 27.6 | 40.2 | -0.9 | 22.6 |
| Nylon 66 resin (PA66 resin) | 4.5 | 42.0 | 46.5 | -0.3 | 14.8 |
| Epoxy adhesive | 4.2 | 43.6 | 47.8 | 1.6 | 13.9 |
| Polystyrene resin (PS resin) | 6.8 | 33.8 | 40.6 | 2.9 | 19.5 |
| Polyvinylidene chloride resin (PVDC resin) | 2.8 | 43.0 | 45.8 | 3.2 | 12.9 |
| Polyoxymethylene resin (POM resin) | 2.1 | 42.5 | 44.6 | 4.1 | 12.2 |
| Polycarbonate resin (PC resin) | 0.4 | 46.3 | 46.7 | 4.2 | 6.1 |
| Polybutylene terephthalate resin (PBT resin) | 3.8 | 37.5 | 41.3 | 4.5 | 16.3 |
| Polyphenylene sulfide resin (PPS resin) | 1.1 | 44.0 | 45.1 | 4.5 | 9.7 |
| Polyethylene terephthalate resin (PET resin) | 1.1 | 42.7 | 43.8 | 5.0 | 10.3 |
| Polyvinyl alcohol resin (PVA resin) | 3.3 | 36.5 | 39.8 | 5.4 | 16.2 |
| Polyvinyl chloride resin (PVC resin) | 0.3 | 43.7 | 44.0 | 5.4 | 7.0 |
| Acrylonitrile/butadiene/styrene resin (ABS resin) | 2.0 | 39.5 | 41.5 | 5.5 | 13.3 |
| Polyethylene resin (PE resin) | 0.0 | 35.7 | 35.7 | 9.0 | 6.9 |
| Polypropylene resin (PP resin) | 0.4 | 29.7 | 30.1 | 10.6 | 13.3 |
| Polytetrafluoroethylene resin (PTFE resin) | 2.1 | 19.4 | 21.5 | 11.4 | 20.2 |
| Hexafluoropropylene resin (HFP resin) | 0.0 | 14.9 | 14.9 | 14.0 | 12.6 |

The first surface treatment and the second surface treatment are performed by subjecting the metal member 20 to irradiation with laser light and exposure to an oxygen concentration-controlled atmosphere.

That is, first, while moving the laser light irradiation position in the first direction X (scanning), the metal joining surface 22 is irradiated with pulsed laser light. As a result of this, at the position irradiated with laser light, the roughened portion 23 extending in the first direction X is formed, and, on the periphery of the roughened portion 23, at the position not irradiated with laser light, the peripheral portion 24 is formed.

Then, the metal member 20 having formed thereon the roughened portion 23 and the peripheral portion 24 is exposed to an oxygen concentration-controlled atmosphere, thereby making the oxidation number of the metal different between the roughened portion 23 and the peripheral portion 24.

Incidentally, by controlling at least either of the oxygen concentration of the atmosphere to which the metal member 20 is exposed and the time for which the metal member 20 is exposed to the atmosphere (e.g., one hour to one month), at the same time as the oxidation number of the metal is made different between the roughened portion 23 and the peripheral portion 24, the percent difference S, which will be described later, can also be adjusted.

It is difficult to unconditionally specify the conditions of the irradiation with laser light implemented in the first surface treatment and the second surface treatment as they vary depending on the metal that constitutes the metal member 20. However, as an example, in the case where the metal member 20 is made of Al, the conditions are as follows.

That is, as the laser used, a pulsed laser that emits near-infrared light having a wavelength of 900 to 1,100 nm can be used, and it is possible to use a YVO4 laser, a fiber laser, an excimer laser, or a disk laser, for example. As the laser conditions, the metal joining surface 32 is irradiated, while being scanned in the second direction Y, with pulsed laser light that satisfies the following: the spot distance M represented by the following formula (7) is equal to or smaller than twice the laser spot radius R, and the laser light intensity U represented by the following formula (8) is $1.0 \times 10^5$ W/mm$^2$ or more and $1.0 \times 10^9$ W/mm$^2$ or less.

$$M = V/Q \ldots \text{Formula (7)}$$

$$U = E/(2\pi R^2 \times Q \times B) \ldots \text{Formula (8)}$$

In formulas (7) and (8), V represents the speed of laser light scanning (mm/sec), Q represents the frequency of laser light (Hz), E represents the laser power (W), R represents the spot radius of laser light (mm), and B represents the pulse half-width of laser light (sec).

As shown in FIG. 2, in the case where a plurality of roughened portions 23 spaced apart in the second direction Y are formed, the metal joining surface 22 is irradiated, while being scanned in the first direction X, with the same pulsed laser light at positions spaced at predetermined intervals in the second direction Y.

Incidentally, by controlling the proportion that the roughened portion 23 accounts for on the metal joining surface 22 and the conditions of exposure to an oxygen atmosphere after the irradiation of the metal joining surface 22 with laser light to form the roughened portion 23, the first surface treatment such that methylene iodide causes spreading wetting, or the second surface treatment such that pure water and methylene iodide cause spreading wetting, is performed. The conditions of the exposure of the metal member 20 to an oxygen concentration-controlled atmosphere implemented in the first surface treatment and the second surface treatment are as follows, for example. In the first surface treatment, exposure to an atmosphere having an oxygen concentration of 15 mass% or more and 25 mass% or less and a temperature of 25°C is performed for one hour or more and up to one week. In the second surface treatment, exposure to an atmosphere having an oxygen concentration of 0 mass% or more and 5 mass% or less and a temperature of 25°C is performed for one minute or more and one week or less. It is preferable that in the second surface treatment, compared to the first surface treatment, the metal member 20 is exposed to an oxygen atmosphere for a shorter period of time or is exposed to an atmosphere having a lower oxygen concentration.

In addition, although irradiation with laser light is performed under the same conditions to form the roughened portion 23 and the peripheral portion 24 in the first surface treatment and the second surface treatment, it is preferable that in the second surface treatment, compared to the first surface treatment, the proportion that the roughened portion 23 accounts for on the metal joining surface 22 is higher.

(5-2) Joining Step

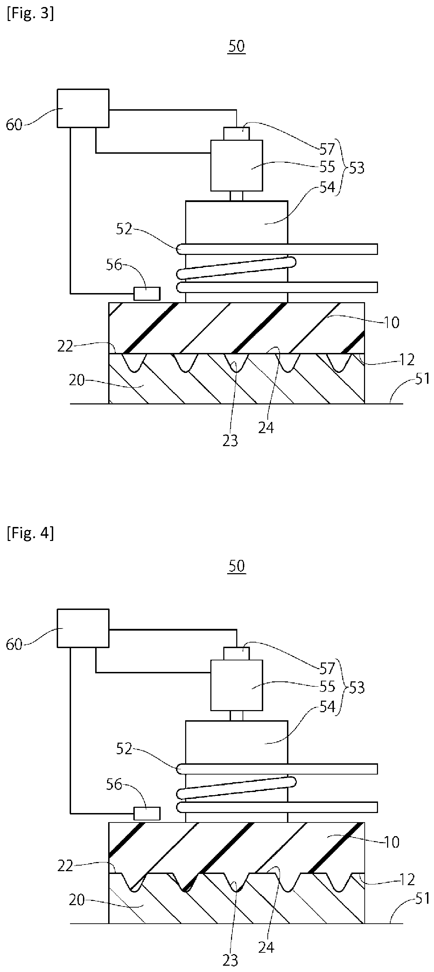

In the case where the synthetic resin that constitutes the synthetic resin member 10 is a thermoplastic resin, in the joining step, for example, with the metal member 20 and the synthetic resin member 10 being heated, the resin joining surface 12 is brought into contact with the metal joining surface 22 while being pressurized. As a result of this, the synthetic resin member 10 is joined to the metal joining surface 22 of the metal member 20 to obtain the metal-resin joined body 30. In this embodiment, a first step and a second step are performed using a joining apparatus 50 as shown in FIG. 3 to produce the metal-resin joined body 30.

The joining apparatus 50 includes a stage 51 on which the metal member 20 is mounted, a heating apparatus 52 that inductively heats the metal member 20 mounted on the stage 51, a press apparatus 53 that pressure-joins the synthetic resin member 10 to the metal member 20, and a control apparatus 60 that controls the heating apparatus 52 and the press apparatus 53.

The heating apparatus 52 includes an induction heating coil connected to a power supply apparatus (not shown). When drive power is input from the power supply apparatus in response to a command from the control apparatus 60, a magnetic field is generated from the induction heating coil to inductively heat the metal joining surface 22 of the metal member 20 mounted on the stage 51.

The heating apparatus 52 includes a temperature sensor 56 that measures the temperature of the metal joining surface 22 of the metal member 20 mounted on the stage 51. The temperature of the metal joining surface 22 detected by the temperature sensor 56 is input to the control apparatus 60. Based on the detected temperature input from the temperature sensor 56, the control apparatus 60 controls the output of the heating apparatus 52 such that the temperature of the metal joining surface 22 becomes a predetermined temperature.

Incidentally, in this embodiment, the temperature sensor 56 is composed of a noncontact radiation thermometer and measures the temperature of a portion of the induction heating coil of the heating apparatus 52 proximate to the synthetic resin member 10. In the temperature sensor 56, the correlation of the measured temperature with a thermocouple provided between the resin joining surface 12 and the metal joining surface 22 has previously been investigated. That is, with a thermocouple being provided between the resin joining surface 12 and the metal joining surface 22, the temperature has been measured in the temperature sensor 56 and the thermocouple while heating the metal joining surface 22 by the heating apparatus 52 to investigate the correlation of the measured temperature between the temperature sensor 56 and the thermocouple. In the temperature sensor 56, the temperature of the thermocouple estimated from the measurement results based on the correlation with the thermocouple is taken as the temperature of the metal joining surface 22.

The press apparatus 53 includes a rod 54 formed from a ceramic or like insulator, a pressurization section 55 that moves the rod 54 to press the synthetic resin member 10 against the metal member 20, and a pressure sensor 57 that detects the pressure acting on the synthetic resin member 10 when the rod 54 presses the synthetic resin member 10 against the metal member 20.

As shown in FIG. 3, the rod 54 may be inserted into the hollow part of the induction heating coil that the heating apparatus 52 has, and placed to face the synthetic resin member 10.

The pressurization section 55 includes a servo motor capable of variably controlling the applied pressure, a pneumatic cylinder controlled by an electro-pneumatic regulator, a spring type pressurizer, and the like. In response to a command from the control apparatus 60, the pressurization section 55 can control the speed of moving the synthetic resin member 10 together with the rod 54, the position thereof, and the pressure when pressing the synthetic resin member 10 against the metal member 20.

The pressure sensor 57 detects the pressure acting on the synthetic resin member 10 when the synthetic resin member 10 comes into contact with the metal member 20 and pressurizes the metal member 20, and inputs the detected pressure to the control apparatus 60. Based on the detected pressure input from the pressure sensor 57, the control apparatus 60 controls the output of the pressurization section 55 of the press apparatus 53 such that the pressure acting on the synthetic resin member 10 becomes a predetermined pressure.

The control apparatus 60 includes a computer and is connected to the heating apparatus 52, the press apparatus 53, the temperature sensor 56, and the pressure sensor 57.

The control apparatus 60 controls the operation of the heating apparatus 52 and the press apparatus 53 according to the detection results from the temperature sensor 56 and the pressure sensor 57 and also to a preset program, thereby joining the resin joining surface 12 to the metal joining surface 22 mounted on the stage 51 to integrate the metal member 20 and the synthetic resin member 10.

Specifically, for the production of the metal-resin joined body 30 using the joining apparatus 50, the metal member 20 is mounted on the stage 51 such that the metal joining surface 22, which has been subjected to the first surface treatment or the second surface treatment, faces the synthetic resin member 10, which will be set later.

Next, the resin joining surface 12 is placed to face the metal joining surface 22 of the metal member 20 mounted on the stage 51. As shown in FIG. 3, in this embodiment, the synthetic resin member 10 is placed such that the resin joining surface 12 contacts the metal joining surface 22.

Next, the heating apparatus 52 is placed to face the metal joining surface 22 of the metal member 20 across the synthetic resin member 10. In the case shown in FIG. 3, the heating apparatus 52 is placed above the synthetic resin member 10, and the synthetic resin member 10 is placed between the heating apparatus 52 and the metal member 20.

Next, the first step, in which the metal joining surface 22 is heated to a first temperature T1 by the heating apparatus 52, thereby heating the resin joining surface 12 in contact with the metal joining surface 22 to the first temperature T1, and also, in the state of being heated to the first temperature T1, the metal member 20 and the synthetic resin member 10 are pressurized at a first pressure P1, is performed.

Specifically, the control apparatus 60 supplies drive power to the heating apparatus 52, and a magnetic field is generated from the induction heating coil provided in the heating apparatus 52 to heat the metal joining surface 22 of the metal member 20. At that time, the drive power supplied to the heating apparatus 52, the position of the induction heating coil provided in the heating apparatus 52, and the like are adjusted such that the temperature of the metal joining surface 22 detected by the temperature sensor 56 becomes the first temperature T1.

Together with the heating of the metal member 20 as described above, the press apparatus 53 moves the rod 54 to press the synthetic resin member 10 against the metal member 20, and pressurizes the synthetic resin member 10 and the metal member 20 such that the pressure detected by the pressure sensor 57 becomes the first pressure P1. As a result of this, the press apparatus 53 brings the resin joining surface 12 into contact with the metal joining surface 22 heated to the first temperature T1, and pressurizes the synthetic resin member 10 and the metal member 20 at the first pressure P1.

For example, the press apparatus 53 pressurizes the synthetic resin member 10 and the metal member 20 at the first pressure P1 for a predetermined time Sp1 (e.g., 0.1 seconds or more and 10 seconds or less). While the press apparatus 53 is pressurizing the synthetic resin member 10 and the metal member 20 at the first pressure P1, the heating apparatus 52 preferably continues to heat the metal member 20 such that the temperature of the metal joining surface 22 is maintained at the first temperature T1.

Incidentally, while the heating apparatus 52 is raising the temperature of the metal joining surface 22 to the first temperature T1, the press apparatus 53 may pressurize the synthetic resin member 10 and the metal member 20 at the first pressure P1. For example, while performing pressurization at the first pressure P1, the temperature of the metal joining surface 22 is raised to reach the first temperature T1 from room temperature. As a result of pressurizing the synthetic resin member 10 and the metal member 20 at the first pressure P1 at the time of raising the temperature of the metal joining surface 22, heat is more likely to be transferred from the metal joining surface 22 to the resin joining surface 12, and the temperature of the resin joining surface 12 can be quickly raised to the first temperature T1.

In addition, it is also possible that the press apparatus 53 does not pressurize the synthetic resin member 10 and the metal member 20 until the temperature of the metal joining surface 22 reaches the first temperature T1, and, after the first temperature T1 is reached, then the press apparatus 53 pressurizes the synthetic resin member 10 and the metal member 20 at the first pressure P1.

In this embodiment, in the case where the synthetic resin that constitutes the synthetic resin member 10 satisfies the above formula (1), the metal joining surface 22 is subjected to the first surface treatment, while in the case where the synthetic resin that constitutes the synthetic resin member 10 satisfies the above formula (2), the metal joining surface 22 is subjected to the second surface treatment.

Therefore, in the first step, when the synthetic resin of the synthetic resin member 10 near the resin joining surface 12 in contact with the metal joining surface 22 melts or softens, the synthetic resin spreads over the metal joining surface 22 and fills the inside of the roughened portion 23 (see FIG. 4).

In the case where the roughened portion 23 on the metal joining surface 22 has formed thereon a textured surface satisfying the above (a) to (c), the synthetic resin that has flown into the roughened portion 23 is more likely to enter the gaps in the textured surface provided on the roughened portion 23.

Then, after the press apparatus 53 pressurizes the synthetic resin member 10 and the metal member 20 at the first pressure P1 for the predetermined time Sp1, the first step is completed, and a transition is made to the second step.

Upon transition to the second step, the heating apparatus 52 stops heating the metal member 20 or reduces the amount of heating. In addition, the press apparatus 53 pressurizes the synthetic resin member 10 and the metal member 20 such that the pressure detected by the pressure sensor 57 becomes a second pressure P2 that is higher than the first pressure P1.

In the second step, when the heating apparatus 52 stops heating the metal member 20 or reduces the amount of heating, the metal joining surface 22 can no longer maintain the first temperature T1, and the temperature decreases from the first temperature T1. While the temperature of the metal joining surface 22 is decreasing, the press apparatus 53 pressurizes the synthetic resin member 10 and the metal member 20 at the second pressure P2.

The press apparatus 53 pressurizes the synthetic resin member 10 and the metal member 20 at the second pressure P2 until the temperature of the resin joining surface 12 and the metal joining surface 22 drops to at least a second temperature T2. Here, the second temperature T2 is a temperature that is lower than the first temperature T1. The press apparatus 53 preferably continues to pressurize the synthetic resin member 10 and the metal member 20 until the temperature of the synthetic resin member 10 and the metal member 20 drops to a third temperature T3 that is lower than the second temperature T2.

Then, after the temperature of the synthetic resin member 10 and the metal member 20 drops to a predetermined temperature, the metal-resin joined body 30, in which the synthetic resin member 10 is joined to the metal member 20, is taken out from the joining apparatus 50.

Here, the first temperature T1 can be equal to or higher than a melting point Tm of the thermoplastic resin that constitutes the synthetic resin member 10 and equal to or lower than the decomposition temperature of the thermoplastic resin (i.e., equal to or lower than the temperature at which the thermoplastic resin begins to vaporize). Preferably, the first temperature T1 can be set to be equal to or lower than a temperature that is 20°C lower than the decomposition temperature of the thermoplastic resin. More preferably, the first temperature T1 can be set to be equal to or higher than the melting point Tm of the thermoplastic resin that constitutes the synthetic resin member 10 and equal to or lower than a temperature (first upper limit temperature) that is 20°C higher than the melting point Tm of the thermoplastic resin (Tm $\leq$ T1 $\leq$ Tm + 20°C).

The second temperature T2 only needs to be a temperature that is lower than the first temperature T1, and is preferably equal to or lower than a temperature (second upper limit temperature) that is 10°C higher than the melting point Tm of the thermoplastic resin that constitutes the synthetic resin member 10 (T2 $\leq$ Tm + 10°C), and it is preferable that the second temperature T2 is set to be equal to or higher than a temperature (lower limit temperature) that is 20°C lower than the melting point Tm of the thermoplastic resin that constitutes the synthetic resin member 10. That is, it is preferable that the second temperature T2 is set to be equal to or higher than the lower limit temperature and equal to or lower than the second upper limit temperature (Tm - 20°C $\leq$ T2 < Tm + 10°C).

The third temperature T3 only needs to be a temperature that facilitates the handling of the obtained metal-resin joined body 30, and may be, for example, equal to or lower than the glass transition point of the thermoplastic resin that constitutes the synthetic resin member 10 or 50°C, whichever temperature is lower.

In addition, the first pressure P1, at which the synthetic resin member 10 and the metal member 20 are pressurized in the first step, only needs to be a pressure at which a contact for the purpose of making the temperature of the synthetic resin member 10 the same as that of the metal member due to the heat of the heated metal member 20 through thermal conduction can be sufficiently obtained, and is preferably a pressure equal to or lower than the compressive yield stress of the thermoplastic resin. It is difficult to unconditionally specify the first pressure P1 as it varies depending on the thermoplastic resin that constitutes the synthetic resin member 10, but a pressure of 10 MPa or less is preferable.

The second pressure P2, at which the synthetic resin member 10 and the metal member 20 are pressurized in the second step, only needs to be a pressure that is higher than the first pressure P1, and is preferably 10 MPa or more and 100 MPa or less, for example.

Incidentally, upon transition from the first step to the second step, it is possible that the settings of either the heating apparatus 52 or the press apparatus 53 are changed first, and then the settings of the other are changed, and it is also possible to change both settings at the same time.

That is, upon transition from the first step to the second step, the pressure applied by the press apparatus 53 may be changed from the first pressure P1 to the second pressure P2 after heating by the heating apparatus 52 is stopped or the amount of heating is reduced, or it is also possible to change the pressure applied by the press apparatus 53 at the same time as heating by the heating apparatus 52 is stopped or the amount of heating is reduced. In addition, it is also possible that heating by the heating apparatus 52 is stopped or the amount of heating is reduced immediately after the pressure applied by the press apparatus 53 is changed.

In addition, although this embodiment has described the case where the press apparatus 53 moves the synthetic resin member 10 toward the metal member 20, it is also possible to move the metal member 20 toward the synthetic resin member 10.

In addition, the synthetic resin member 10 and the metal member 20 may be joined locally, or the synthetic resin member 10 and the metal member 20 may also be joined over a wider area. In addition, the plane shape of the joining point may also be any shape such as dotted, linear, or planar.

In addition, in this embodiment, upon transition from the first step to the second step, the pressure applied by the press apparatus 53 is changed from the first pressure P1 to the second pressure P2 without considering the temperature of the metal joining surface 22. However, it is also possible that after executing the first step, the pressure applied to the metal member 20 and the synthetic resin member 10 is changed from the first pressure P1 to the second pressure P2 after the temperature of the metal joining surface 22 drops to the second temperature T2.

That is, in the same manner as above, after the first step is executed for the predetermined time Sp1, first, heating by the heating apparatus 52 is stopped or the amount of heating is reduced. Then, the temperature of the resin joining surface 12 and the metal joining surface 22 is lowered (cooled) to the second temperature T2 that is lower than the first temperature T1. After the temperature of the resin joining surface 12 and the metal joining surface 22 becomes the second temperature T2, the press apparatus 53 changes the pressure applied to the synthetic resin member 10 and the metal member 20 from the first pressure P1 to the second pressure P2, and the second step is started.

According to such a joining method, the pressure applied by the press apparatus 53 can be changed at an appropriate timing where the synthetic resin member 10 is not excessively deformed, and the metal-resin joined body 30 having high joining strength can be obtained while minimizing deformation of the synthetic resin member 10.

(6) Effects

On the metal joining surface 22 where methylene iodide causes spreading wetting, a synthetic resin that satisfies the above formula (1) shows high wettability. Therefore, as a result of joining the synthetic resin member 10 having such a synthetic resin in the resin joining surface 12 to the metal joining surface 22 of the metal member 20, even when the synthetic resin has a relatively low temperature near its melting point at the time of joining, the synthetic resin spreads over the metal joining surface 22 without applying a high pressure, and the roughened portion 23 provided on the metal joining surface 22 is filled with the synthetic resin without any gaps. As a result, the synthetic resin member 10 and the metal member 20 can be firmly joined together while obtaining gas tightness and liquid tightness therebetween.

On the metal joining surface 22 where pure water and methylene iodide cause spreading wetting, a synthetic resin that satisfies the above formula (2) shows high wettability. Therefore, as a result of joining the synthetic resin member 10 having such a synthetic resin in the resin joining surface 12 to the metal joining surface 22 of the metal member 20, even when the synthetic resin has a relatively low temperature near its melting point at the time of joining, the synthetic resin spreads over the metal joining surface 22 without applying a high pressure, and the roughened portion 23 provided on the metal joining surface 22 is filled with the synthetic resin without any gaps. As a result, the synthetic resin member 10 and the metal member 20 can be firmly joined together while obtaining gas tightness therebetween.

In this embodiment, when the fractal dimension D of the roughened portion 23 determined by a box-counting method through cross-sectional SEM observation is 2.1 or more and 3.0 or less, such a roughened portion 23 has a fractal surface with high surface roughness, and a synthetic resin shows high wettability on the metal joining surface 22. Therefore, at the time of joining, the synthetic resin that constitutes the synthetic resin member 10 is more likely to spread over the metal joining surface 22.

In addition, when the roughened portion 23 has a kurtosis (sku) of 3 or more or a skewness of 0 or more, a synthetic resin shows high wettability on the metal joining surface 22. Therefore, at the time of joining, the synthetic resin that constitutes the synthetic resin member 10 is more likely to spread over the metal joining surface 22.

In this embodiment, when the roughened portion 23 provided on the metal joining surface 22 is in the form of a recessed groove extending in a predetermined direction, at the time of joining the synthetic resin member 10 and the metal member 20 together, air present on the roughened portion 23 is pushed out along the groove, and the roughened portion 23 is more likely to be filled with the synthetic resin without any gaps.

(7) Examples

In order to specifically show the effects of the above embodiments, metal members (test pieces) of Examples 1 to 8 and Comparative Examples 1 to 3 were prepared. Incidentally, the invention is not limited to Examples 1 to 8.

In Examples 1 to 8 and Comparative Examples 1 and 2, a single-mode laser having a laser wavelength of 1,064 nm and a spot radius of 0.03 mm was applied to form, on the metal joining surface of the metal member, a roughened portion having a length of 18 mm in the first direction at a pitch of 0.1 mm in the second direction. Incidentally, the metals used in Examples 1 to 4 and Comparative Examples 1 and 2 are as shown in Table 1 below.

In Examples 1, 3, 5 and 7, after the roughened portion formation on the metal joining surface, each test piece was left for 24 hours in an atmosphere at 25°C having an oxygen concentration of 0.5 mass% with the remainder nitrogen, and in Examples 2, 4, 6 and 8, after the roughened portion formation on the metal joining surface, each test piece was left for 24 hours in an atmosphere at 25°C having an oxygen concentration of 20 mass% with the remainder nitrogen. In addition, in Comparative Examples 1 to 3, after the roughened portion formation on the metal joining surface, oxides adhering to the metal joining surface were removed with an acid. Subsequently, each test piece was left for one week in an atmosphere at 25°C having an oxygen concentration of 20 mass% with the remainder nitrogen to form a uniform oxide film on the metal joining surface, and the oxidation number of the metal on the metal joining surface was made constant.

Then, a synthetic resin member made of PA66 resin, PPS resin, PBT resin, and PP resin was joined to the metal joining surface of each of the metal members of Examples 1 to 4 and Comparative Examples 1 and 2, thereby preparing test pieces for joining strength testing (metal-resin joined bodies). A synthetic resin member made of PA66 resin and PPS resin was joined to the metal joining surface of each of the metal members of Examples 5 to 8 and Comparative Example 3, thereby preparing test pieces for joining strength testing (metal-resin joined bodies). Incidentally, the dimension of the metal member is 18 mm $\times$ 45 mm $\times$ 1.6 mm, the dimension of the synthetic resin member is 10 mm $\times$ 40 mm $\times$ 3.0 mm, and the joining dimension between the metal member and the synthetic resin member is 10 mm $\times$ 5 mm.

In addition, the metal members of Examples 1, 2, and 4 and Comparative Examples 1 and 2 were each provided with a 20-mm-diameter through-hole through the metal joining surface, and PA66 resin and PPS resin were joined to the metal joining surface so as to seal the through-hole, thereby preparing test pieces for helium (He) leak testing.

Details of the metal member, details of the synthetic resin member, the dimension of the metal member, the dimension of the synthetic resin member, and the joining area (overlap area) between the synthetic resin member and the metal member used in each of Examples 1 to 8 and Comparative Examples 1 to 3 are as follows.

- Cu: C1100
- Al: A1050
- SUS304
- Fe: SPCC
- PA66 resin: Asahi Kasei Leona 66 (1300S)
- PPS resin : SUSTEEL® SGX120
- PBT resin: Toray TORAYCON (110G-X54)
- PP resin: Novatec® HG30U

The evaluation methods are as follows.

(A) SEM Observation of Metal Joining Surface

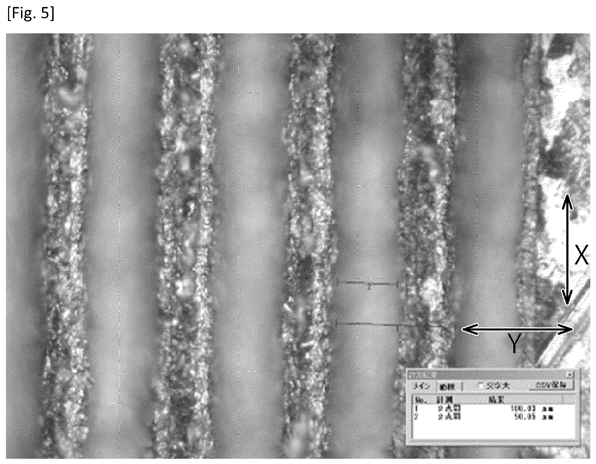

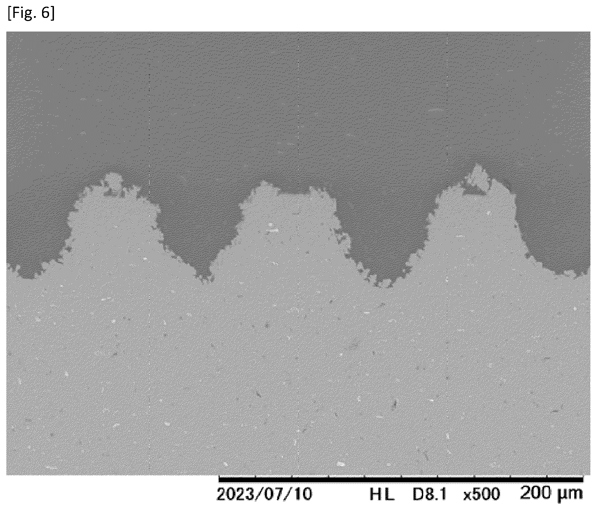

With respect to each of the metal members of Examples 1 to 8 and Comparative Examples 1 to 3, with no synthetic resin member being joined thereto, the metal joining surface having formed thereon a roughened portion and a cross-section of the metal member were subjected to SEM observation. FIGs. 5 and 6 show plan and cross-sectional views of the metal member of Example 2. In FIG. 5, the symbol X indicates the first direction (the direction of laser light scanning) and the symbol Y indicates the second direction.

As shown in FIGs. 5 and 6, at the laser-irradiated position, a rough surface portion in the form of a recessed groove extending in the first direction X was formed, and a non-laser-irradiated peripheral portion was formed on the periphery thereof. The rough surface portion had a fractal surface having a fractal dimension of 2.35 as determined by a box-counting method formed on the inside thereof.

Also in Examples 1 and 3 to 8 and Comparative Examples 1 to 3, the same roughened portion as in Example 2 was formed on the metal joining surface.

(B) Percent Difference S

Using an XPS analyzer (PHI5000 VersaProbe II manufactured by ULVAC-PHI), the roughened portions and peripheral portions of Examples 1 to 4 and Comparative Examples 1 and 2 were subjected to measurement under the following conditions. Incidentally, the diameter of the measurement range is preferably set to be smaller than the width of the roughened portion 23 or the peripheral portion 24 (the length in the second direction Y), and preferably set to be not more than 1/2 the width of the roughened portion 23 or the peripheral portion 24.

<XPS Measurement Conditions>

X-ray conditions: Al alpha mono 4.5 W
Measurement range: $\varphi 18\ \mu m$

In Examples 1 and 2 and Comparative Example 1, 2p3/2 spectra of Cu derived from the roughened portion and the peripheral portion were obtained. From the obtained spectra, the peak corresponding to Cu and $Cu_2O$ and the peak corresponding to CuO were separated, and the peak area of each peak was calculated. Then, for each of the roughened portion and the peripheral portion, the ratio R of a peak area S2 of the peak corresponding to CuO relative to a peak area S1 of the peak corresponding to Cu and $Cu_2O$ (= S2/S1) was calculated, and the ratio R in the roughened portion and the ratio R in the peripheral portion were obtained. Then, the difference $\Delta R$ between the ratio R in the roughened portion and the ratio R in the peripheral portion was divided by the ratio R in the peripheral portion to obtain the percent difference S.

In Examples 3 and 4 and Comparative Example 2, 2p spectra of Al derived from the roughened portion and the peripheral portion were obtained. From the obtained spectra, the peak corresponding to Al and the peak corresponding to $Al_2O_3$ were separated, and the peak area of each peak was calculated. Then, for each of the roughened portion and the peripheral portion, the ratio R of a peak area S4 of the peak corresponding to $Al_2O_3$ relative to a peak area S3 of the peak corresponding to Al (= S4/S3) was calculated, and the ratio R in the roughened portion and the ratio R in the peripheral portion were obtained. Then, the difference $\Delta R$ between the ratio R in the roughened portion 23 and the ratio R in the peripheral portion 24 was divided by the ratio R in the peripheral portion to obtain the percent difference S.

Incidentally, in Examples 1 to 4 and Comparative Examples 1 and 2, the spectra were obtained from four points in each of the roughened portion and the peripheral portion, and the average of the percent differences S calculated from the obtained spectra was used as the percent difference S of each test piece.

(C) Wettability on Metal Joining Surface

With respect to the metal joining surface of each of the metal members of Examples 1 to 8 and Comparative Examples 1 to 3, it was checked whether methylene iodide and pure water caused spreading wetting.

Using DMs-401 of Kyowa Interface Science Co., Ltd., methylene iodide and pure water were dropped onto the metal joining surface of each test piece, and when the contact angle of the liquid droplet on the metal joining surface at one second after the drop was 10° or less, the wetting was determined to be spreading wetting, while when the contact angle was greater than 10°, the wetting was determined to be adhesion wetting.

(D) Joining Strength Test

With respect to each of the test pieces for joining strength testing of Examples 1 to 8 and Comparative Examples 1 to 3, joining strength was measured. In the test method specified in JIS K 6850, the dimension of the synthetic resin member, the dimension of the metal member, and the joining area between the synthetic resin member and the metal member were changed as described above, and other conditions were in accordance with the standards. Using a tensile tester (Shimadzu Corporation, Autograph AGX-V), measurement was performed at a tensile speed of 10 mm/min and a measurement temperature of 25°C. Incidentally, four test pieces were prepared for each of Examples 1 and 2 and Comparative Example 1, and the average of the four measurements was taken as the joining strength of each example.

(E) He Leak Test

With respect to each of the test pieces for He leak testing of Examples 1 to 2 and 4 and Comparative Examples 1 and 2, He was pressurized to 1.5 atm, and gas tightness between the metal joining surface and the resin joining surface was evaluated using a vacuum hood method specified in JIS Z 2331. The smaller the numerical value, the higher the vacuum that can be maintained, indicating higher gas tightness.

[Table 2]

| | | Metal Member | Percent Difference S | Wettability | | Joining Strength (MPa) | | | | He Leak Test (Pa·m$^3$/sec) | |
|---|---|---|---|---|---|---|---|---|---|---|---|
| | | | | Methylene iodide | Pure water | PA66 resin | PPS resin | PBT resin | PP resin | PA66 resin | PPS resin |
| Example | 1 | Cu | 27.3% | Spreading wetting | Spreading wetting | 29.7 | 36.1 | 30.4 | 19.2 | 7.2 x 10$^{-8}$ | 6.0 x 10$^{-8}$ |
| | 2 | Cu | 5.0% | Spreading wetting | Adhesion wetting | 22.4 | 35.9 | 30.1 | 18.4 | 8.1 x 10$^{-6}$ | 6.3 x 10$^{-8}$ |
| | 3 | Al | 217.0% | Spreading wetting | Spreading wetting | 28.4 | 30.5 | 28.9 | 17.9 | - | - |
| | 4 | Al | 117.6% | Spreading wetting | Adhesion wetting | 21.7 | 29.8 | 23.8 | 15.2 | 1.3 x 10$^{-6}$ | 2.7 x 10$^{-8}$ |
| | 5 | SUS304 | - | Spreading wetting | Spreading wetting | 35.6 | 39.7 | - | - | - | - |
| | 6 | SUS304 | - | Spreading wetting | Adhesion wetting | 29.4 | 38.9 | - | - | - | - |
| | 7 | Fe | - | Spreading wetting | Spreading wetting | 32.8 | 36.4 | - | - | - | - |
| | 8 | Fe | - | Spreading wetting | Adhesion wetting | 27.9 | 37 | - | - | - | - |
| Comparative Example | 1 | Cu | 0.5% | Adhesion wetting | Adhesion wetting | 16.7 | 19.2 | 17.9 | 10.2 | 1.2 x 10$^{-5}$ | 1.5 x 10$^{-5}$ |
| | 2 | Al | 0.5% | Adhesion wetting | Adhesion wetting | 15.7 | 16.3 | 14.1 | 8.9 | 9.0 x 10$^{-5}$ | 2.3 x 10$^{-5}$ |
| | 3 | SUS303 | 0.5% | Adhesion wetting | Adhesion wetting | 20.1 | 24.3 | - | - | - | - |

The results are as shown in Table 2. In Comparative Examples 1 and 2 where the percent difference S was less than 3%, methylene iodide and pure water caused adhesion wetting.

Meanwhile, in Examples 1 to 8 where the percent difference S was 3% or more, methylene iodide caused spreading wetting. In addition, in Examples 1, 3, 5 and 7, not only methylene iodide but also pure water caused spreading wetting.

The test pieces of Examples 1 and 3 where methylene iodide and pure water caused spreading wetting and the test pieces of Examples 2 and 4 where methylene iodide caused spreading wetting, while pure water caused adhesion wetting, were joined to PA66 resin, PPS resin, PBT resin, and PP resin with higher joining strength compared to Comparative Examples 1 and 2. In addition, the test pieces of Examples 5 and 7 where methylene iodide and pure water caused spreading wetting and the test pieces of Examples 6 and 8 where methylene iodide caused spreading wetting, while pure water caused adhesion wetting, were joined to PA66 resin and PPS resin with higher joining strength compared to Comparative Examples 1 to 3.

In addition, in the test pieces of Examples 1, 2, and 4, gas tightness at the joining surface with PA66 resin and PPS resin was higher compared to Comparative Examples 1 and 2.

In particular, the test pieces of Examples 1, 3, 5, and 7 where methylene iodide and pure water caused spreading wetting were joined to the PA66 resin satisfying the above formula (2) with higher joining strength compared to the test pieces of Examples 2, 4, 6, and 8 where methylene iodide caused spreading wetting, while pure water caused adhesion wetting.

In addition, in the test piece of Example 1, gas tightness at the joining surface with the PA66 resin satisfying the above formula (2) was also higher compared to the test piece of Example 2.

Reference Signs List

10: Synthetic resin member
12: Resin joining surface
20: Metal member
22: Metal joining surface
23: Roughened portion
24: Peripheral portion
50: Joining apparatus
51: Stage
52: Heating apparatus
53: Press apparatus
54: Rod
55: Pressurization section
56: Temperature sensor
57: Pressure sensor
60: Control apparatus

**Claims**

1. A metal member for being joined to a resin joining surface of a resin member having a synthetic resin that satisfies the following formula (1), wherein

   the metal member includes a metal joining surface that contacts the resin joining surface, and
   on the metal joining surface, a roughened portion provided with a recess and a peripheral portion provided on a periphery of the roughened portion are given, an oxidation number of a metal that constitutes the metal member differs between the roughened portion and the peripheral portion, and methylene iodide causes spreading wetting:
   [Mathematical formula 1]

$$\sqrt{\gamma_{iod}{}^{p}} \times \sqrt{\gamma^{p}} + \sqrt{\gamma_{iod}{}^{d}} \times \sqrt{\gamma^{d}} - \gamma \geq 0$$

Formula (1)

   wherein $\gamma_{iod}{}^{p}$ is a polar component of surface free energy of methylene iodide (mJ/m$^2$), $\gamma_{iod}{}^{d}$ is a dispersive component of the surface free energy of methylene iodide (mJ/m$^2$), $\gamma^{p}$ is a polar component of surface free energy of the synthetic resin in a solid state (mJ/m$^2$), $\gamma^{d}$ is a dispersive component of the surface free energy of the synthetic resin in a solid state (mJ/m$^2$), and y is the sum of the polar component and the dispersive component of the surface free energy of the synthetic resin in a solid state (= $\gamma^{p} + \gamma^{d}$).

2. A metal member for being joined to a resin joining surface of a resin member having a synthetic resin that satisfies the following formula (2), wherein

   the metal member includes a metal joining surface that contacts the resin joining surface, and
   on the metal joining surface, a roughened portion provided with a recess and a peripheral portion provided on a periphery of the roughened portion are given, an oxidation number of a metal that constitutes the metal member differs between the roughened portion and the peripheral portion, and pure water and methylene iodide cause spreading wetting:

[Mathematical formula 2]

$$\sqrt{\gamma_w{}^p} \times \sqrt{\gamma^p} + \sqrt{\gamma_{iod}{}^d} \times \sqrt{\gamma^d} - \gamma \geq 0$$

Formula (2)

wherein $\gamma_w{}^p$ is a polar component of surface free energy of pure water (mJ/m$^2$), $\gamma$iod$^d$ is a dispersive component of surface free energy of methylene iodide (mJ/m$^2$), $\gamma^p$ is a polar component of surface free energy of the synthetic resin in a solid state (mJ/m$^2$), $\gamma^d$ is a dispersive component of the surface free energy of the synthetic resin in a solid state (mJ/m$^2$), and y is the sum of the polar component and the dispersive component of the surface free energy of the synthetic resin in a solid state (= $\gamma^p + \gamma^d$).

3. The metal member according to claim 1 or 2, wherein the roughened portion has a fractal dimension of 2.1 or more and 3.0 or less as determined by a box-counting method through cross-sectional SEM observation.

4. The metal member according to claim 1 or 2, wherein the roughened portion is provided in a form of a groove extending in a predetermined direction.

5. A metal-resin joined body obtainable by bringing a metal joining surface of a metal member into contact with a resin joining surface of a resin member having a synthetic resin that satisfies the following formula (3) to join the metal member and the resin member together, wherein
on the metal joining surface, a roughened portion provided with a recess and a peripheral portion provided on a periphery of the roughened portion are given, an oxidation number of a metal that constitutes the metal member differs between the roughened portion and the peripheral portion, and methylene iodide causes spreading wetting:
[Mathematical formula 3]

$$\sqrt{\gamma_{iod}{}^p} \times \sqrt{\gamma^p} + \sqrt{\gamma_{iod}{}^d} \times \sqrt{\gamma^d} - \gamma \geq 0$$

Formula (3)

wherein $\gamma_{iod}{}^p$ is a polar component of surface free energy of methylene iodide (mJ/m$^2$), $\gamma$iod$^d$ is a dispersive component of the surface free energy of methylene iodide (mJ/m$^2$), $\gamma^p$ is a polar component of surface free energy of the synthetic resin in a solid state (mJ/m$^2$), $\gamma^d$ is a dispersive component of the surface free energy of the synthetic resin in a solid state (mJ/m$^2$), and y is the sum of the polar component and the dispersive component of the surface free energy of the synthetic resin in a solid state (= $\gamma^p + \gamma^d$).

6. A metal-resin joined body obtainable by bringing a metal joining surface of a metal member into contact with a resin joining surface of a resin member having a synthetic resin that satisfies the following formula (4) to join the metal member and the resin member together, wherein
on the metal joining surface, a roughened portion provided with a recess and a peripheral portion provided on a periphery of the roughened portion are given, an oxidation number of a metal that constitutes the metal member differs between the roughened portion and the peripheral portion, and pure water and methylene iodide cause spreading wetting:
[Mathematical formula 4]

$$\sqrt{\gamma_w{}^p} \times \sqrt{\gamma^p} + \sqrt{\gamma_{iod}{}^d} \times \sqrt{\gamma^d} - \gamma \geq 0$$

Formula (4)

wherein $\gamma_w{}^p$ is a polar component of surface free energy of pure water (mJ/m$^2$), $\gamma$iod$^d$ is a dispersive component of surface free energy of methylene iodide (mJ/m$^2$), $\gamma^p$ is a polar component of surface free energy of the synthetic resin in a solid state (mJ/m$^2$), $\gamma^d$ is a dispersive component of the surface free energy of the synthetic resin in a solid state (mJ/m$^2$), and y is the sum of the polar component and the dispersive component of the surface free energy of the synthetic resin in a solid state (= $\gamma^p + \gamma^d$).

7. A method for producing a metal-resin joined body obtainable by bringing a metal joining surface of a metal member into contact with a resin joining surface of a resin member having a synthetic resin that satisfies the following formula (5) to join the metal member and the resin member together,
the method for producing a metal-resin joined body comprising performing a treatment for forming a roughened portion having a recess on the metal joining surface and a peripheral portion on a periphery of the roughened portion, and also for making an oxidation number of a metal that constitutes the metal member different between the roughened portion and the peripheral portion such that methylene iodide causes spreading wetting on the metal joining surface:
[Mathematical formula 5]

$$\sqrt{\gamma_{iod}{}^{p}} \times \sqrt{\gamma^{p}} + \sqrt{\gamma_{iod}{}^{d}} \times \sqrt{\gamma^{d}} - \gamma \geq 0$$

Formula (5)

wherein $\gamma_{iod}{}^{p}$ is a polar component of surface free energy of methylene iodide ($mJ/m^2$), $\gamma_{iod}{}^{d}$ is a dispersive component of the surface free energy of methylene iodide ($mJ/m^2$), $\gamma^{p}$ is a polar component of surface free energy of the synthetic resin in a solid state ($mJ/m^2$), $\gamma^{d}$ is a dispersive component of the surface free energy of the synthetic resin in a solid state ($mJ/m^2$), and y is the sum of the polar component and the dispersive component of the surface free energy of the synthetic resin in a solid state ($= \gamma^{p} + \gamma^{d}$).

8. A method for producing a metal-resin joined body obtainable by bringing a metal joining surface of a metal member into contact with a resin joining surface of a resin member having a synthetic resin that satisfies the following formula (6) to join the metal member and the resin member together,
the method for producing a metal-resin joined body comprising performing a treatment for forming a roughened portion having a recess on the metal joining surface and a peripheral portion on a periphery of the roughened portion, and also for making an oxidation number of a metal that constitutes the metal member different between the roughened portion and the peripheral portion such that pure water and methylene iodide cause spreading wetting on the metal joining surface:
[Mathematical formula 6]

$$\sqrt{\gamma_{w}{}^{p}} \times \sqrt{\gamma^{p}} + \sqrt{\gamma_{iod}{}^{d}} \times \sqrt{\gamma^{d}} - \gamma \geq 0$$

Formula (6)

wherein $\gamma_{w}{}^{p}$ is a polar component of surface free energy of pure water ($mJ/m^2$), $\gamma iod^{d}$ is a dispersive component of surface free energy of methylene iodide ($mJ/m^2$), $\gamma^{p}$ is a polar component of surface free energy of the synthetic resin in a solid state ($mJ/m^2$), $\gamma^{d}$ is a dispersive component of the surface free energy of the synthetic resin in a solid state ($mJ/m^2$), and y is the sum of the polar component and the dispersive component of the surface free energy of the synthetic resin in a solid state ($= \gamma^{p} + \gamma^{d}$).

[Fig. 1]

<u>30</u>

[Fig. 2]

<u>20</u>

[Fig. 3]

50

[Fig. 4]

50

[Fig. 5]

[Fig. 6]

2023/07/10    HL    D8.1    x500    200 µm

## INTERNATIONAL SEARCH REPORT

| International application No. |
|---|
| **PCT/JP2023/041367** |

| A. | CLASSIFICATION OF SUBJECT MATTER |
|---|---|

*B29C 45/14*(2006.01)i; *B23K 26/352*(2014.01)i; *B29C 65/02*(2006.01)i; *B29C 65/70*(2006.01)i
FI:   B29C45/14; B23K26/352; B29C65/70; B29C65/02

According to International Patent Classification (IPC) or to both national classification and IPC

| B. | FIELDS SEARCHED |
|---|---|

Minimum documentation searched (classification system followed by classification symbols)

B29C45/14; B23K26/352; B29C65/02; B29C65/70

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2023/0037586 A1 (UNIVERSITY OF IOWA RESEARCH FOUNDATION) 09 February 2023 (2023-02-09)<br>  paragraphs [0043], [0072]-[0073] | 1-2 |
| X | CN 116329760 A (THE ARMY ARMORED MILITARY ACADEMY OF PLA) 27 June 2023 (2023-06-27)<br>  paragraphs [0041]-[0043] | 1-2 |
| X | WO 2023/144974 A1 (MUTSUKI DENKI KK) 03 August 2023 (2023-08-03)<br>  paragraphs [0008], [0024]-[0025], [0031], [0045]-[0049], [0058], [0068]-[0080], fig. 1-4 | 1-8 |
| A | WO 2021/230025 A1 (HIROTEC CORPORATION) 18 November 2021 (2021-11-18)<br>  paragraphs [0045]-[0056] | 1-8 |
| A | JP 2023-059621 A (NIPPON LIGHT METAL COMPANY, LTD.) 27 April 2023 (2023-04-27)<br>  paragraphs [0014]-[0068] | 1-8 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 February 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2023/041367**

| Patent document cited in search report | | | Publication date (day/month/year) | Patent family member(s) | Publication date (day/month/year) |
|---|---|---|---|---|---|
| US | 2023/0037586 | A1 | 09 February 2023 | (Family: none) | |
| CN | 116329760 | A | 27 June 2023 | (Family: none) | |
| WO | 2023/144974 | A1 | 03 August 2023 | EP 4245522 A1<br>paragraphs [0008], [0013]-[0015], [0020]-[0021], [0034]-[0040], [0049], [0059]-[0072], fig. 1-4 | |
| WO | 2021/230025 | A1 | 18 November 2021 | US 2023/0173763 A1<br>paragraphs [0062]-[0074]<br>EP 4151356 A1 | |
| JP | 2023-059621 | A | 27 April 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5998303 B